Europäisches Patentamt

(19) European Patent Office

Office européen des brevets

(11) Publication number: **0 158 439**
**A2**

# (12) EUROPEAN PATENT APPLICATION

(21) Application number: **85301572.5**

(22) Date of filing: **07.03.85**

(51) Int. Cl.⁴: **B 29 D 30/54**

(30) Priority: **07.03.84 GB 8406009**

(43) Date of publication of application:
**16.10.85 Bulletin 85/42**

(84) Designated Contracting States:
**AT BE CH DE FR GB IT LI LU NL SE**

(71) Applicant: **MALCOLM BROWN LIMITED**
**Moore View Works Havelock Street Great Horton**
**West Yorkshire Bradford, BD7 4EX(GB)**

(72) Inventor: **Brown, Malcolm**
**100 Moore Avenue Wibsey**
**Bradford BD6 3JE West Yorkshire(GB)**

(74) Representative: **Stanley, David William et al,**
**APPLEYARD LEES & CO. 15 Clare Road Halifax**
**West Yorkshire HX1 2HY(GB)**

(54) Testing of envelopes used in the retreading of tyres.

(57) A stripped tyre (10) is placed on a rim 12 with a curing tube (14) located between the tyre and rim. A pre-cured tread (16) is then placed around the tyre and an envelope (18) is placed around the tyre and tread. The envelope is clamped and sealed against the side wall of the tyre by flange plates (20).

The envelope is tested for leaks, either in its wall or in its mounting against the tyre, by evacuating air through an envelope valve (19), stopping the evacuation of that air and then observing a guage indicating the pressure between the tyre tread and the envelope.

FIG.1.

## TESTING OF ENVELOPES USED IN THE RETREADING OF TYRES.

The present invention relates to the retreading of tyres and in particular to a tester of an envelope used in the retreading of tyres and to a method of testing the envelope.

In the retreading of tyres by the precured tread method, a new tread is placed upon the tyre. The tyre is then mounted on a curing rim with an inflatable tube located between the curing rim and the tyre. The tyre with its new tread is then placed within a curing envelope, the whole of which is mounted upon a curing rim. The mounted tyre is then placed in an autoclave which is a heated steel chamber with such controls as to create a heated vacuum condition. The pressure of the curing envelope caused by the vacuum creates pressure onto the already applied new tread, and that pressure combined with the high temperature serves to cure the new tread onto the tyre.

Should the envelope have a leak or be punctured, or should the envelope not be correctly mounted onto the curing rim assembly, then the new tread will not bond onto the tyre in a satisfactory way. This can result in the tyre failing during process, which is extremely expensive, particularly if tyres are frequently failing in process. Even should a tyre appear to be satisfactory after it has been cured in the autoclave, there is a possibility that the tyre is liable to failure when it is in use. The failure of a tyre on a moving vehicle is extremely dangerous, as it can cause the tyre to blow out or strip its tread, possibly causing the vehicle to swerve dangerously.

According to one aspect of the present invention, an envelope tester comprises evacuation means, arranged to evacuate air from between a curing envelope and a tyre - tread, control means operable to stop the evacuation of air, and display means arranged to indicate the pressure between the envelope and the tyre tread. With such a tester, an envelope can be located around a tyre and air can be evacuated from between the tyre and the envelope.

Once sufficient air has been evacuated, the control means can be operated to stop the evacuation of air.

The display means then indicates the pressure between the tyre and the envelope.  Should any leak be present in the envelope, or should the envelope not be correctly mounted round the tyre, then the display means will indicate an increase in the pressure between the envelope and the tyre, before the assembly has been placed in an autoclave, and an attempt has been made  to bond the new tread onto the tyre.  Thus, the faulty bonding of a new tread to a tyre due to there being a leak in the envelope, or in the mounting between the envelope and the tyre, is avoided.

The tester may also include air pressure supply means capable of inflating a curing tube located between a tyre and a rim which allows the tester to provide all of the evacuation and pressurisation of air necessary in the mounting of a curing tube and tyre on a rim, the mounting of an envelope around the tyre and the pressurisation and evacuation respectively of the curing tube and the envelope.

The evacuation means may include a Venturi device whereby a reduced pressure arranged to cause the evacuation of air can be created by passing air over an opening of the Venturi.  The Venturi provides a convenient  way of evacuating the air and furthermore may allow the evacuation of air to be brought about by passing air from a pressurised system through the Venturi.  Thus, only an air pressure or air supply line may be provided to provide the evacuation means without any need for an expensive suction motor. An additional advantage of the provision of the air pressure or supply means is that the same air pressure or supply means can also be used to provide the air pressure supply means capable of inflating the curing tube.

In the event that a loss of pressure between the tyre tread and the envelope is indicated, the air pressure supply means can be used to pressurise the space between the envelope and the tyre tread in order that any leaks in the envelope, or any leaks in the mounting of the envelope can be readily apparent.

According to another aspect of the present invention, a method of testing an envelope in which the envelope surrounds a tyre tread located around a tyre, comprises evacuating air from between the tyre tread and the envelope and then stopping the evacuation of the air and then viewing display means arranged to indicate the pressure between the envelope and the tyre tread.

The present invention also includes a method of testing an envelope using an envelope tester as herein defined.

The invention can be carried into practice in various ways, but one embodiment will now be described by way of example with reference to the accompanying drawings, in which:-

Figure 1 is a cross-section through a tyre and tyre tread mounted on a rim and surrounded by an envelope, and

Figure 2 is a diagram of the envelope tester.

In retreading tyres, a used tyre, 10, is stripped and rebuilt with a pre - cured tread, 16. The curing tube, 14, is placed inside the tyre. The curing envelope, 18, is then placed upon the rebuilt tyre. The tyre complete with its new tread, curing tube and curing envelope is then mounted onto the curing rim, 12, which can either have high flanges     or loose flange plates, 20, with which the envelope is trapped against the sidewall of the tyre. The curing rim, 12, is then mechanically locked.

In order to test the mounted assembly, the curing tube, 14, is inflated to a pressure of 2 Bar, thereby trapping the curing envelope, 18, against the rim assembly. Air is evacuated from between the envelope and the tyre in order to bias the envelope against the tyre and its new tread. A curing tube valve 15 and an envelope valve 19 are provided.

In the event of there being a leak in the envelope, or in the mounting of the envelope to the rim, air will gradually ingress into the space between the envelope and the tyre to increase the pressure within that space with the result that the pressure of the new tread against the tyre is reduced, either locally or all around the tyre. The reduction of the pressure of the new tyre tread against the tyre can prevent the bonding or curing of the tyre tread onto the tyre with the possible result that the whole tyre is lost. If there is only a small leak in the envelope, the new tread may appear to have bonded to the tyre in a satisfactory manner, but when the tyre is mounted on a vehicle, the new tread is liable to become detached from the tyre with possible disasterous results. The detachment of the tyre tread tends generally to occur when the centrifugal forces on the new tread are fairly high, i.e. when the vehicle is travelling at high speed, and evidence of stripped treads can be seen at the sides of motorways.

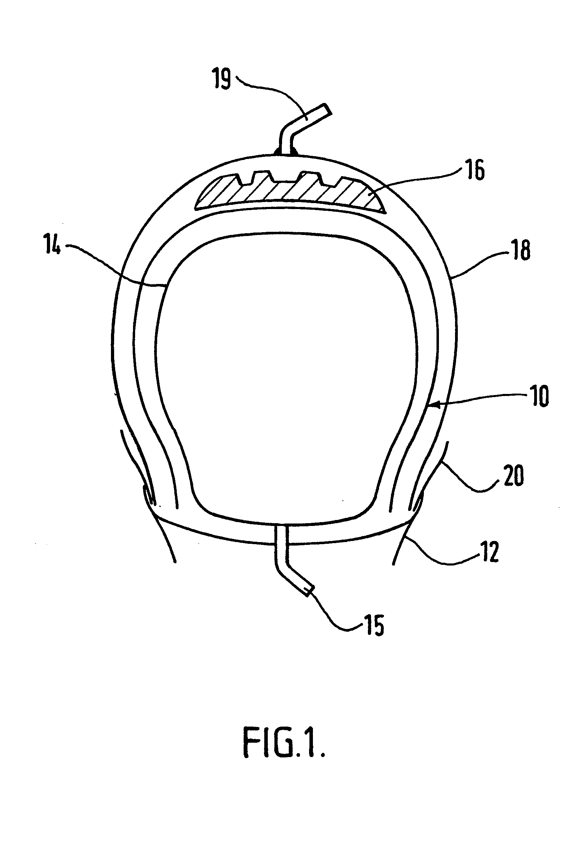

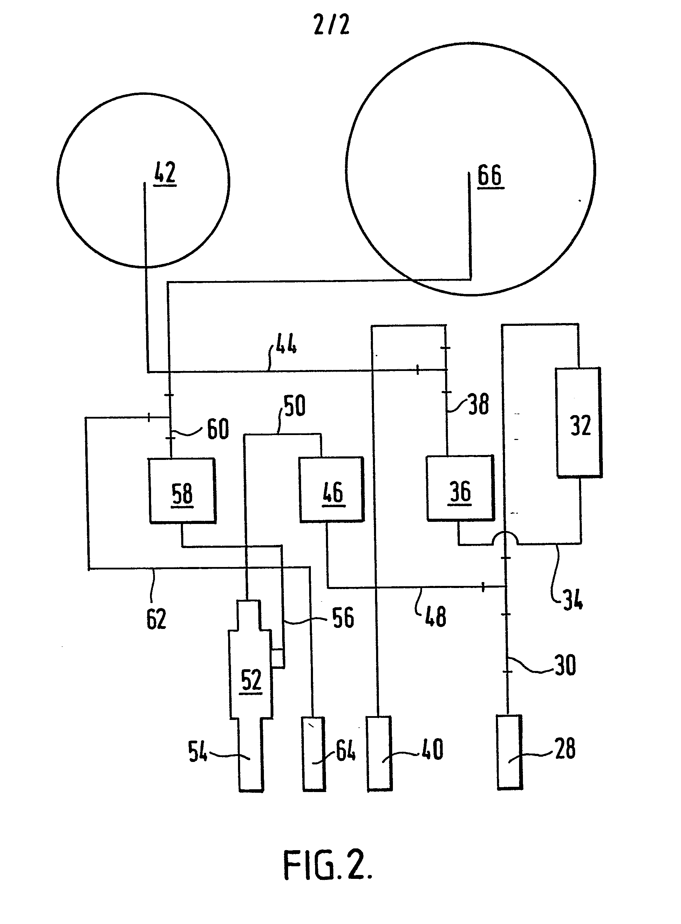

In order to test that there is no leak in an envelope or in the mounting of the envelope to the rim, the envelope tester shown diagrammatically in Figure 2 is provided. The tester is used on the envelope after the envelope has been assembled into the configuration shown in Figure 1 but before the insertion into the autoclave.

The tester includes a mains air supply source 28 which is fed via a supply pipe 30, through a regulator 32, via a further pipe 34 through an inner tube switch 36 and then via another pipe 38 to a tube connector 40. A pressure guage 42 is connected to the pipe 38 by a line 44 in order to give an indication of the pressure within the pipe 38. In use, the connector 40 is connected to the curing tube and the switch 36 is depressed in order to inflate the curing tube. The switch 36 is released when the pressure guage 42 indicates that the required pressure within the curing tube has been reached.

The air supply source is also connected to an envelope air switch 46 via a pipe 48 connected to the supply pipe 30. Depression of the switch 46 allows air to flow through a pipe 50, across a Venturi 52 and out through an exhaust 54. The flow of air through the Venturi causes air to be sucked out of a pipe 56 to create a reduced pressure therein. The pipe 56 is connected to an envelope vacuum switch 58 which, when depressed, allows air to be sucked out of a pipe 60 and a pipe 62 in communication with an envelope connector 64. The pipe 60 is also in communication with a vacuum guage 66 provided to give a reading of the reduced pressure within the pipe 60.

In use, after the inner tube switch has been depressed in order to inflate the curing tube to the required pressure, the envelope connector 64 is attached so as to be in communication with the space between the tyre 10 and the envelope 18, and the envelope air switch 46 is depressed, followed by the envelope vacuum switch 58 to allow air to be evacuated from between the envelope and tyre. When the vacuum guage 66 remains static the envelope vacuum switch 58 is pulled out followed by the envelope air switch 46.

Should the vacuum guage maintain its reading then there is no leak in the envelope and the tyre assembly can be located inside the autoclave for normal bonding or curing of new tread onto the tyre.

Should the vacuum guage fail to maintain its reading then it is apparent that there is a leak in the envelope or in the mounting of the envelope to the rim. If the leak is not readily apparent, it can be found by quickly fitting a dummy connector to the curing tube valve to minimise loss of air from that tube, and attaching the tube connector 40 to the space between the tyre and the envelope. The inner tube switch 36 can then be depressed until the space between the envelope and the tyre has been pressurised to the required amount. Any leak in the envelope or in the mounting of the envelope will be apparent from the noise of the escaping air and a new envelope can be fitted or the mounting of the envelope can be adjusted as required.

An additional use for the tester is in checking the curing tube for any leaks, this being done by attaching the envelope connector 64 to the curing tube, evacuating air from within the tube, in the manner previously described, and checking that the reduced pressure is able to be held by the tube by viewing the vacuum guage 66.

CLAIMS

1.    An envelope tester comprising evacuation means (52) arranged to evacuate air from between a curing envelope (18) and a tyre tread (16), control means (58) operable to stop the evacuation of air and display means (66) arranged to indicate the pressure between the envelope and the tyre tread.

2.    A tester as claimed in Claim 1 including air pressure means (40).

3.    A tester as claimed in Claim 1 or 2 in which the evacuation means includes a venturi (52) arranged to cause the generation of a reduced pressure for use in the evacuation of air from between the curing envelope and the tyre tread, the reduced pressure being arranged to be generated by passing air over an opening in the venturi.

4.    A tester as claimed in Claim 2 and 3 in which a common air pressure source (28) is arranged to provide the air pressure supply means (40) and the air which is arranged to pass over the opening in the venturi.

5.    A method of testing an envelope (18) which surrounds a tyre tread (16) located around a tyre (10) comprising evacuating air from between the tyre tread and the envelope, stopping the evacuation of the air, and viewing display means (66) indicating the pressure between the envelope and the tyre tread.

6.    A method of testing an envelope as claimed in Claim 5 by using a tester as claimed in any of Claims 1 to 4.

FIG.1.

FIG.2.